# EUROPEAN PATENT APPLICATION

(11) **EP 4 683 082 A1**
(43) Date of publication of application: **21.01.2026**
(21) Application number: 24913785.2
(22) Date of filing: 18.11.2024
(51) Int. Cl.: H01M 50/367, H01M 50/342, H01M 50/24, H01M 50/289, H01M 50/262

(54) **BATTERY PACK AND DEVICE INCLUDING SAME**

(30) Priority: 26.12.2023 KR 20230190998
(71) Applicant: LG Energy Solution, Ltd., Seoul 07335 (KR)
(72) Inventor: KANG, Jae Hyuk, Daejeon 34122 (KR)
(74) Representative: BCKIP Part mbB
(86) International application number: PCT/KR2024/096601
(87) International publication number: WO 2025/143981

(57) **Abstract**

A battery pack according to certain embodiments of the present disclosure comprises: at least one battery module including a plurality of battery cells; a pack frame that is opened at its upper part and houses at least one of the battery modules; and a pack cover that covers the opened upper part of the pack frame; wherein a venting part for discharging a venting gas is formed on an upper surface of the battery module, and wherein the battery module includes a protrusion part that protrudes upward from the upper surface of the battery module.

## Description

### [TECHNICAL FIELD]

### Cross-Reference to Related Application(s)

This application claims priority to and the benefit of Korean Patent Application no. KR10-2023-0190998, filed on December 26, 2023, the entire contents of which are incorporated herein by reference.

The present disclosure relates to a battery pack and a device including the same, and more particularly, to a battery pack capable of securing a venting space, and a device including the same.

### [BACKGROUND ART]

The use of mobile devices such as cell phones, laptops, camcorders, and digital cameras has been routinized in modern society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles (EV), hybrid electric vehicles (HEV), plug-in hybrid electric vehicles (P-HEV) and so on. Thus, the necessity to develop the secondary batteries is increasing.

Presently, commercially available batteries include nickel-cadmium batteries, nickelhydrogen batteries, nickel-zinc batteries, and lithium secondary batteries. Of these batteries, lithium secondary batteries are emerging as the most popular, as they do not suffer from the memory effect, and therefore, are freely rechargeable, have low self-discharge rates, and have high energy density, as compared to nickel-based secondary batteries.

Such a lithium secondary battery mainly uses a lithium-based oxide and a carbon material as a positive electrode active material and a negative electrode active material, respectively. The lithium secondary battery includes an electrode assembly fabricated by disposing a separator between a positive electrode plate and a negative electrode plate, which are coated with the positive electrode active material and the negative electrode active material, respectively, and a battery case that hermetically houses the electrode assembly together with an electrolyte.

In general, according to the exterior shapes of battery cases, lithium secondary batteries may be classified into can-shaped secondary batteries fabricated by mounting the electrode assembly in a metal can, and pouch-shaped secondary batteries fabricated by mounting the electrode assembly in a pouch made of an aluminum laminate sheet.

In case of secondary batteries used for small-size devices, two or three battery cells are arranged, and in case of secondary batteries used for medium- and large-size vehicle devices such as automobiles, a battery module is used, which includes multiple battery cells electrically connected to each other. In the battery module, the multiple battery cells are connected in series or parallel to form a battery cell stack, which improves the capacity and the power. One or more battery modules may be mounted together with various control and protection systems such as a battery management system (BMS), a battery disconnect unit (BDU), and a cooling system to form a battery pack.

A battery pack may include a battery module as a subordinate concept thereof, and the battery module may include a battery cell as a subordinate concept thereof. In addition, the number of battery cells included in the battery module or the number of battery modules included in the battery pack may be variously determined according to the output or capacity of the battery pack required for an electric vehicle.

However, safety is one of the most important issues in such a battery pack. In particular, if a thermal event occurs in at least one of the plurality of battery cells included in the battery pack, high-temperature venting gas and heat are generated. In order to protect the battery pack from such high-temperature venting gas and heat and to discharge the high-temperature venting gas and heat to the outside, a venting space must be secured and maintained inside the battery pack.

### [DETAILED DESCRIPTION OF THE INVENTION]

### [Technical Problem]

Therefore, it is an object of the present disclosure to provide a battery pack that can secure and maintain a venting space so that high-temperature venting gas and heat generated inside the battery pack due to a thermal event can be smoothly discharged to the outside, and a device including the same.

However, the technical objects to be solved by embodiments of the present disclosure are not limited to the above-mentioned objects, and can be variously expanded within the scope of the technical idea included in the present disclosure.

### [Technical Solution]

According to certain aspects of the present disclosure, there is provided a battery pack comprising: at least one battery module including a plurality of battery cells; a pack frame that is opened at its upper part and houses at least one of the battery modules; and a pack cover that covers the opened upper part of the pack frame; wherein a venting part for discharging a venting gas is formed on an upper surface of the battery module, and wherein the battery module includes a protrusion part that protrudes upward from the upper surface of the battery module.

The protrusion part may protrude from the upper surface of the battery module toward the pack cover.

The battery pack may further comprise a heat resistant sheet attached to a lower surface of the pack cover.

The protrusion part may protrude from the upper surface of the battery module toward the heat resistant sheet.

The protrusion part may face the heat resistant sheet.

A nut hole may be formed on the upper surface of the battery module, and the protrusion part may include a flange bolt that is inserted into the nut hole.

The nut hole may have a form in which a rivet nut is inserted into a through hole formed on the upper surface of the battery module.

The flange bolt may include a fastening part where a screw thread is formed, and a flange part located at one end of the fastening part.

The protrusion part may include a spacer located between the flange part and the upper surface of the battery module.

The battery module may include a module frame that houses the battery cells, and the venting part may be formed on the upper surface of the module frame.

The battery module may include a module frame that houses the battery cells, the module frame may include a bottom frame on which the battery cells are placed and a top cover assembly that covers the upper parts of the battery cells, and the venting part may be formed in the top cover assembly.

The top cover assembly may include a top plate located on an upper part of the battery cells, and a top cover that covers an upper surface of the top plate.

The venting part may include a venting hole formed in the top plate, and a rupture part that is formed in the top cover and located corresponding to the venting hole. The rupture part may have a structure that ruptures at a prescribed pressure or higher.

An opening may be formed in an area excluding a connection part in a circumference of the rupture part, and the rupture part may be connected to the top cover by the connection part.

When viewed along a direction perpendicular to one surface of the top cover, the opening may be located on an outer circumference of the venting hole.

A nut hole may be formed in the top cover assembly, and the protrusion part may include a flange bolt inserted into the nut hole. The top cover may be fixed between the top plate and the flange bolt.

The venting part may be a portion having a smaller thickness than adjacent areas or a portion in which a groove is formed along its circumference.

According to certain other aspects of the present disclosure, there is provided a device comprising the above-mentioned battery pack.

### [Advantageous Effects]

According to certain embodiments of the present disclosure, a protrusion protruding upward is provided on an upper part of the battery module inside the battery pack, so that a venting space can be secured and maintained between the battery module and the pack cover. As a result, high-temperature venting gas and heat generated inside the battery pack due to a thermal event can be smoothly discharged to the outside of the battery pack, thereby ensuring the safety of the battery pack and the device including the same.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a partial perspective view showing a part of a battery pack according to certain embodiments of the present disclosure.
FIG. 2 is a perspective view showing a battery module according to certain embodiments of the present disclosure.
FIG. 3 is a plan view of the battery module of FIG. 2 as viewed from above.
FIG. 4 is an exploded perspective view of the battery module of FIG. 2.
FIG. 5 is a perspective view showing a battery cell stack, a first busbar frame, and a second busbar frame included in the battery modules of FIGS. 2 and 4.
FIG. 6 is a perspective view showing one of the battery cells included in the battery cell stack of FIG. 5.
FIG. 7 is a cross-sectional view showing a part of a cross section taken along the cutting line A-A' of FIG. 1.
FIG. 8 is a cross-sectional view showing a part of a cross section taken along the cutting line B-B' of FIG. 1.
FIG. 9 is a perspective view showing a top cover assembly included in a battery module according to certain embodiments of the present disclosure.
FIG. 10 is an exploded perspective view of a top cover assembly according to certain embodiments of the present disclosure.
FIG. 11 is a perspective view showing a top plate of the top cover assembly of FIG. 10.
FIG. 12 is a partially enlarged perspective view showing a section "C" of FIG. 11.
FIG. 13 is a perspective view showing a top cover of the top cover assembly of FIG. 10.
FIG. 14 is a partially enlarged perspective view showing a section "D" of FIG. 13.
FIG. 15 is a partial perspective view showing a top plate and a rivet nut according to certain embodiments of the present disclosure.
FIG. 16 is a partial perspective view showing a top plate, a rivet nut, and a protrusion part according to certain embodiments of the present disclosure.
FIG. 17 is a partial perspective view showing a top cover assembly, a rivet nut, and a protrusion part according to certain embodiments of the present disclosure.
FIG. 18 is a plan view of a top plate according to certain embodiments of the present disclosure as viewed from above.
FIG. 19 is a plan view of a top cover according to certain embodiments of the present disclosure as viewed from above.
FIGS. 20 and 21 are cross-sectional views of a battery pack according to modified embodiments of the present disclosure.
FIGS. 22 and 23 are cross-sectional views showing a venting part according to certain other embodiments of the present disclosure.
FIG. 24 is a perspective view showing first and second end plates and first and second insulating covers according to certain embodiments of the present disclosure.
FIG. 25 is a perspective view showing a bottom frame and a heat sink according to certain embodiments of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

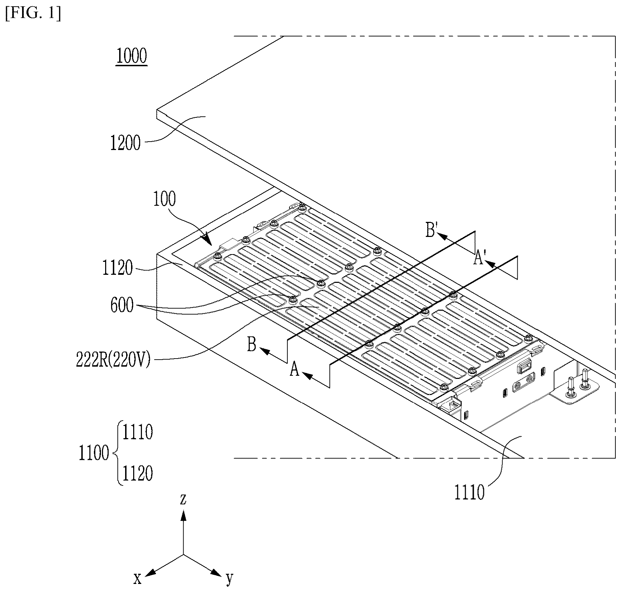

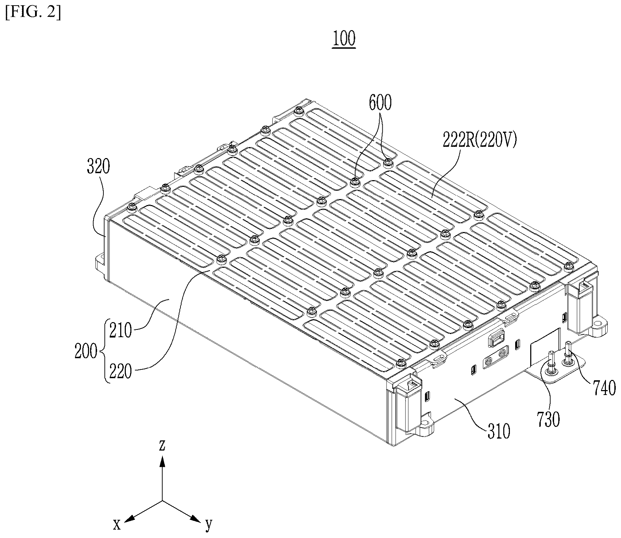

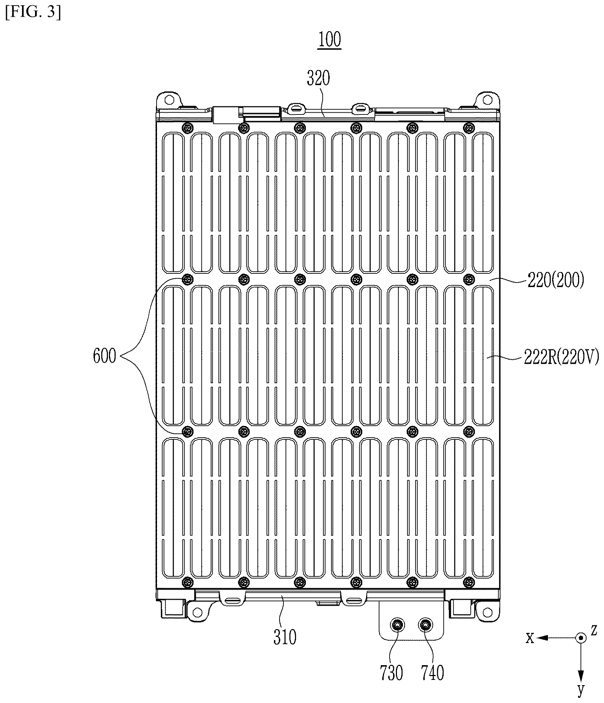

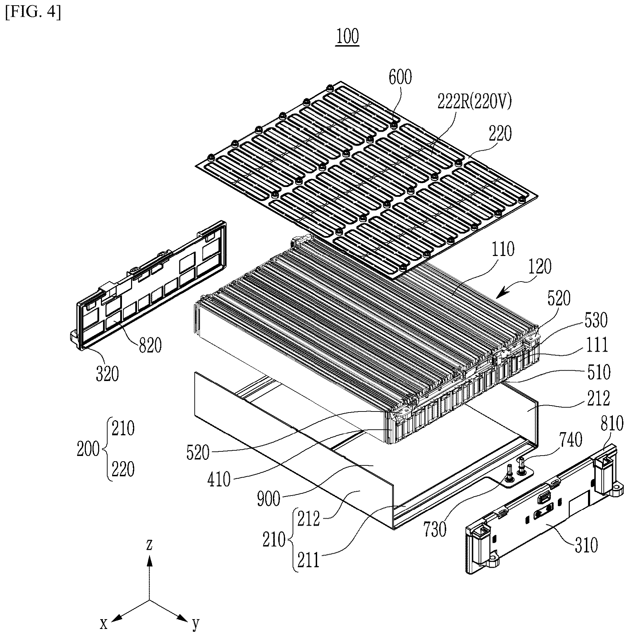

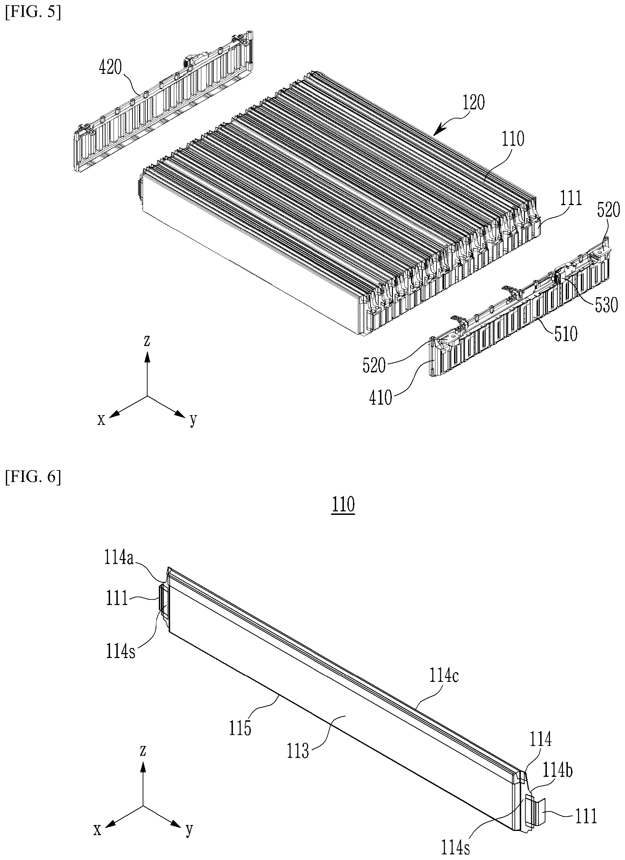

FIG. 1 is a partial perspective view showing a part of a battery pack according to certain embodiments of the present disclosure. FIG. 2 is a perspective view showing a battery module according to certain embodiments of the present disclosure. FIG. 3 is a plan view of the battery module of FIG. 2 as viewed from above. FIG. 4 is an exploded perspective view of the battery module of FIG. 2. FIG. 5 is a perspective view showing a battery cell stack, a first busbar frame, and a second busbar frame included in the battery modules of FIGS. 2 and 4. FIG. 6 is a perspective view showing one of the battery cells included in the battery cell stack of FIG. 5.

Referring to FIGS. 1 to 6, a battery pack 1000 according to certain embodiments of the present disclosure includes at least one battery module 100 including a plurality of battery cells 110; a pack frame 1100 that is opened at its upper part and houses at least one of the battery modules 100; and a pack cover 1200 that covers the opened upper part of the pack frame 1100. In FIG. 1, only one battery module 100 housed in the pack frame 1100 is shown, but a plurality of battery modules 100 may be housed inside the pack frame 1100.

The pack frame 1100 may include a bottom frame 1110 on which at least one battery module 100 is placed, and a side surface frame 1120 that extends along an edge of the bottom frame 1110. Such a side surface frame 1120 may extend in a direction perpendicular to one surface of the bottom frame 1110. An internal space opened at its upper part is provided by the bottom frame 1110 and the side surface frame 1120, and at least one battery module 100 may be housed in the internal space. Meanwhile, the pack cover 1200 may cover the opened upper part of the pack frame 1100.

A venting part 220V for discharging a venting gas is formed on the upper surface of the battery module 100 according to the present embodiments. That is, the battery module 100 according to the present embodiments may have an upper venting structure that discharges high-temperature venting gas and heat caused by a thermal event in an upper direction. Furthermore, the battery module 100 according to the present embodiments includes a protrusion part 600 protruding upward from the upper surface of the battery module 100. The protrusion part 600 may protrude from the upper surface of the battery module 100 toward the pack cover 1200. Due to this protrusion part 600, a venting space through which high-temperature venting gas and heat can flow can be secured and maintained between the battery module 100 and the pack cover 1200. Details of the venting part 220V and the protrusion part 600 will be described later.

The battery module 100 according to the present embodiments includes a plurality of battery cells 110, as mentioned above. The battery cell 110 according to the present embodiments may be various types of battery cells, for example, a pouch-type battery cell, a prismatic battery cell, or a cylindrical battery cell. As an example, as shown in FIGS. 4 to 6, the battery cell 110 according to the present embodiments may be a pouch-type battery cell. Below, a pouch-type battery cell will be described, but the battery cell 110 according to the present embodiments is not limited thereto, and various types of battery cells may be applied thereto.

The battery cell 110 according to the present embodiments may have a structure in which an electrode assembly having electrode leads 111 protruding in one direction or both directions is housed in a pouch-type battery case 114. Such battery cells 110 may have a rectangular sheet shape. The battery cell 110 may be formed by housing an electrode assembly in a battery case 114 made of a laminate sheet including a resin layer and a metal layer, and then adhering the outer peripheral part of the pouch case 114. As an example, the battery cell 110 may have a structure in which two electrode leads 111 face each other and protrude from one end 114a and the other end 114b of the cell main body 113, respectively. As another example, a structure in which all the electrode leads 111 of the battery cells 110 protrude in one direction is also possible. One of the electrode leads 111 is a positive electrode lead, and the other is a negative electrode lead.

The battery cell 110 can be produced by adhering both end parts 114a and 114b of a pouch case 114 and one side part 114c connecting them in a state in which an electrode assembly (not shown) is housed in a battery case 114. In other words, the battery cell 110 according to certain embodiments of the present disclosure has a total of three sealing parts 114s, wherein the sealing parts 114s have a structure that is sealed by a method such as fusion, and the remaining other one side part may be composed of a folding part 115. That is, the battery cell 110 according to the present embodiments may be a pouch-type secondary battery in which the electrode assembly is housed inside the pouch case 114 and the outer peripheral side of the battery case 114 is sealed to form a sealing part 114s. In FIG. 6, only a state in which the sealing parts 114s are formed at both end parts 114a and 114b of the pouch case 114 are shown, and the sealing part is not shown on the side facing the folding part 115, however, the sealing part on the side facing the folding part 115 may be in a state being folded to one side after sealing is completed for space utilization.

The pouch case 114 of the laminate sheet may include an inner resin layer for sealing, a metal layer for preventing penetration of materials, and an outer resin layer located on the outermost side. Based on the electrode assembly inside the pouch case 114, the inner resin layer may be located on the innermost side, the outer resin layer may be located on the outermost side, and the metal layer may be located between the inner resin layer and the outer resin layer.

The outer resin layer has excellent tensile strength and weather resistance relative to the thickness and can exhibit electrical insulation properties in order to protect the electrode assembly from the outside. Such an outer resin layer may include a polyethylene terephthalate (PET) resin or a nylon resin. The metal layer can prevent air, moisture, and the like from flowing into the pouch-type secondary battery. This metal layer may include aluminum (Al). The inner resin layers may be thermally fused to each other by heat and/or pressure applied in a state in which the electrode assembly is embedded. This inner resin layer may include casted polypropylene (CPP) or polypropylene (PP).

The pouch case 114 is divided into two portions, and a concave-shaped housing part in which the electrode assembly can be seated may be formed in at least one of the two portions. Along the outer circumference of this housing part, the inner resin layers of the two portions of the pouch case 114 may be joined to each other to provide a sealing part 114s. The pouch case is sealed in this manner, so that the battery cell 110, which is a pouch-type secondary battery, can be produced.

A plurality of battery cells 110 may be configured within the battery module 100. As an example, the plurality of battery cells 110 may be stacked along one direction so as to be electrically connected to each other, thereby forming a battery cell stack 120. As an example, the plurality of battery cells 110 may be stacked along a direction parallel to the x-axis while standing upright. The battery cells 110 may be stacked from one side surface part 212 to the other side surface part 212 of the bottom frame 210 in a state where one side of the battery cells 110 is parallel to the side surface parts 212 of the bottom frame 210. Thereby, the electrode leads 111 may protrude in a direction perpendicular to the direction in which the battery cells 110 are stacked. In the battery cell 110, one electrode lead 111 may protrude toward the y-axis direction, and the other electrode lead 111 may protrude toward the -y-axis direction. If the electrode leads 111 of the battery cell are electrode leads that protrude only in one direction, the electrode leads 111 may protrude in the y-axis direction or the -y-axis direction.

Meanwhile, the battery module 100 according to the present embodiments may include a module frame 200 that houses the battery cells 110. As an example, a battery cell stack 120 may be housed inside the module frame 200. The venting part 220V according to the present embodiments may be formed on an upper surface of the module frame 200.

Specifically, the module frame 200 according to the present embodiments may include a bottom frame 210 on which battery cells 110 are placed and a top cover assembly 220 that covers the upper parts of the battery cells 110. The venting part 220V according to the present embodiments may be formed in the top cover assembly 220. The battery cells 110 may be housed in a space formed by the bottom frame 210 and the top cover assembly 220. The bottom frame 210 and the top cover assembly 220 may be joined by welding or the like at corresponding corners, so that the module frame 200 may cover the upper part, lower part, and both side parts of the battery cell stack 120.

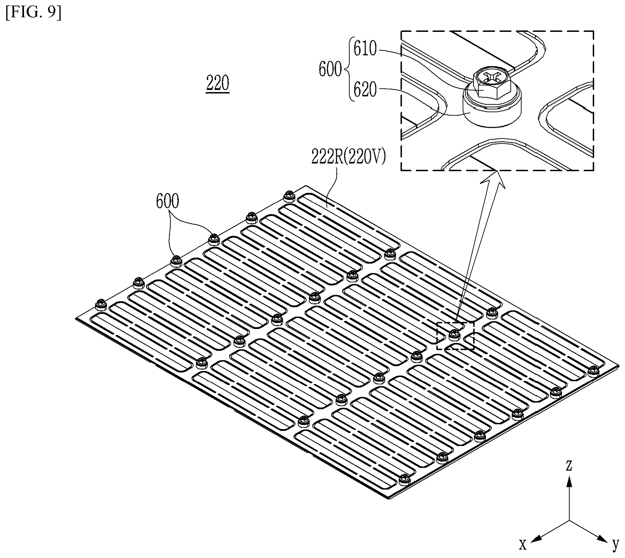

For example, the bottom frame 210 according to the present embodiments may include a bottom part 211 and both side surface parts 212. The both side surface parts 212 may extend upward along a direction perpendicular to one surface of the bottom part 211 from both opposing sides of the bottom part 211. The bottom part 211 and both side surface parts 212 may cover the lower surface and both side surface parts of the battery cell stack 120. As described above, one surface of the battery cells 110 in the battery cell stack 120 is parallel to the side surface parts 212 of the bottom frame 210, and the battery cells 110 may be stacked along a direction from one side surface part 212 to the other side surface part 212. A detailed structure of the top cover assembly 220 according to the present embodiments will be described later with reference to FIGS. 9 to 19.

Meanwhile, in the battery module 100 according to the present embodiments, a first end plate 310 and a second end plate 320 may be arranged on one side of the battery cell stack 120 in the direction in which the electrode lead 111 protrudes and on the opposite side thereof, respectively. The first end plate 310 and the second end plate 320 may be joined to the module frame 200 by a method such as welding. The module frame 200, the first end plate 310, and the second end plate 320 may include a metal material so as to have a predetermined strength. The battery cell stack 120 may be covered by the module frame 200, the first end plate 310 and the second end plate 320 to be protected from external impact, vibration, or the like.

Meanwhile, the battery module 100 according to the present embodiments may include a first busbar frame 410 and a second busbar frame 420 that cover one surface of the battery cell stack 120 in the direction in which the electrode lead 111 protrudes and the opposite surface thereof, respectively. The first busbar frame 410 may be located between the battery cell stack 120 and the first end plate 310, and the second busbar frame 420 may be located between the battery cell stack 120 and the second end plate 320. The first busbar frame 410 and the second busbar frame 420 may include an electrically insulating material, and may prevent the busbar 510 or terminal busbar 520 described below from coming into contact with other portions of the battery cell 110 other than the electrode lead 111 to thereby cause a short circuit.

A busbar 510, a terminal busbar 520, a module connector 530, and the like may be mounted to each of the first busbar frame 410 and the second busbar frame 420. Specifically, the busbar 510, the terminal busbar 520, the module connector 530, and the like may be mounted to a surface opposite to the surface facing the battery cell stack 120 in the first and second busbar frames 410 and 420. The busbar 510 may be electrically connected to the electrode lead 111 of the battery cell 110. As an example, the busbar 510 and the electrode lead 111 may be joined by a welding method. A slit is formed in the first and second busbar frames 410 and 420, and the electrode lead 111 may pass through the slit, and be connected to the busbar 510. The battery cells 110 may be electrically connected in series or in parallel via the busbar 510.

The terminal busbar 520 can be electrically connected to the electrode lead 111, and a part thereof can be exposed to the outside of the battery module 100. The battery module 100 can form an HV (high voltage) connection with other battery modules or electrical equipment through the terminal busbar 520. Here, the HV connection is a connection that serves as a power source for supplying power that requires high voltage, and means a connection between battery cells or a connection between battery modules.

The module connector 530 may have a function of transmitting voltage information of the battery cells 110 or temperature information inside the battery module 100 to the outside. Therefore, a part of the module connector 530 can also be exposed to the outside of the battery module 100.

Next, the venting part and the protrusion part according to the present embodiments will be described.

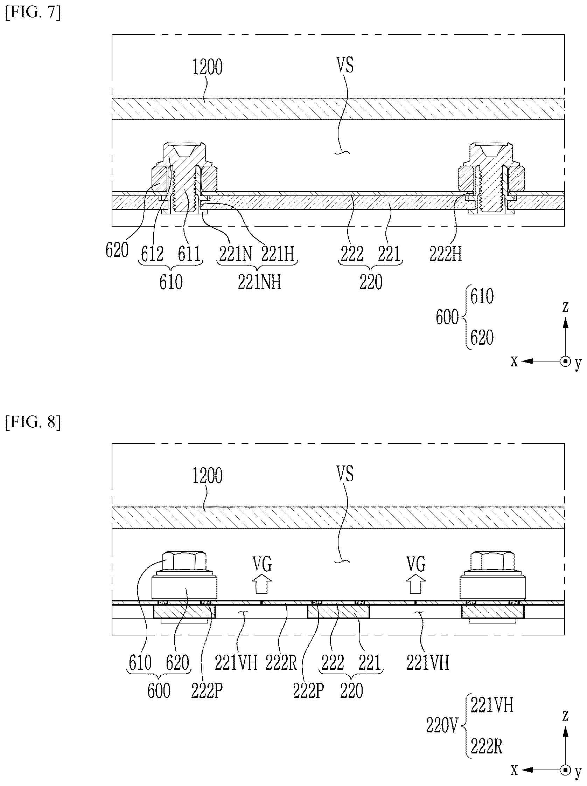

FIG. 7 is a cross-sectional view showing a part of a cross section taken along the cutting line A-A' of FIG. 1. FIG. 8 is a cross-sectional view showing a part of a cross section taken along the cutting line B-B' of FIG. 1. However, FIGS. 7 and 8 show a state in which the pack cover 1200 in FIG. 1 covers the upper part of the pack frame 1100.

Referring to FIGS. 1, 2, 4, 7 and 8 together, the upper surface of the battery module 100 is provided with a venting part 220V for discharging a venting gas VG and a protrusion part 600 protruding upward from the upper surface of the battery module 100, as mentioned above.

The venting part 220V in the present disclosure collectively refers to a mechanism for discharging high-temperature venting gas VG and heat generated inside the battery module 100 to the outside of the battery module 100. That is, the structure or shape of the venting part 220V are not particularly limited as long as it is possible to discharging high-temperature venting gas VG and heat generated inside the battery module 100 due to a thermal event. In the case of the battery module 100 according to the present embodiments, high-temperature venting gas and heat caused by a thermal event can be discharged upward through the venting part 220V.

At this time, the protrusion part 600 protruding upward from the upper surface of the battery module 100 can secure and maintain a venting space VS through which high-temperature venting gas VG and heat can flow between the battery module 100 and the pack cover 1200. In order to protect the battery pack 1000 from high-temperature venting gas VG and heat generated by a thermal event or thermal runaway and to stably discharge them to the outside of the battery pack 1000, the venting space VS must be stably secured and maintained within the battery pack 1000. If the pack cover 1200 is bent inward or closely adhered to the battery module 100 and sufficient venting space VS is not secured and maintained, the high-temperature venting gas VG and heat discharged from the venting part 220V of the battery module 100 are hardly discharged to the outside of the battery pack 1000. If the high-temperature venting gas VG and heat are not smoothly discharged to the outside of the battery pack 1000, it may lead to an explosion or fire of the battery pack 1000. Thus, in the present embodiments, a protrusion part 600 protruding upward from the upper surface of the battery module 100 is provided, hereby realizing a structure that can support the pack cover 1200. The degree of protrusion of the protrusion part 600 is not particularly limited as long as it can secure a minimum vent space VS. The degree of protrusion of the protrusion part 600 can be adjusted taking into consideration the size of the battery module 100, the distance between the battery module 100 and the pack cover 1200, and the like, and the protrusion part 600 may be in contact with the pack cover 1200, or may be spaced apart from the pack cover 1200. That is, in the case of the battery pack 1000 according to the present embodiments, since a venting space VS through which a high-temperature venting gas VG and heat flows can be secured and maintained between the battery module 100 and the pack cover 1200, the safety of the battery pack 1000 is improved.

The number of the protrusion parts 600 is not particularly limited, but it is preferable that the number is plural so that the protrusion parts 600 can be evenly distributed on the entire upper surface of the battery module 100 in order to secure and maintain the venting space VS.

The specific shape or configuration of the protrusion part 600 are not particularly limited as long as it is a shape that protrudes from the upper surface of the battery module 100. Below, the specific shape of the protrusion part 600 will be described in detail as one illustrative example of the present disclosure.

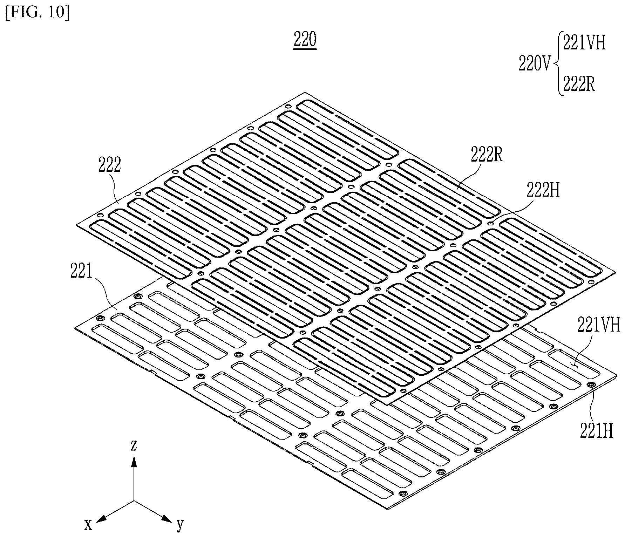

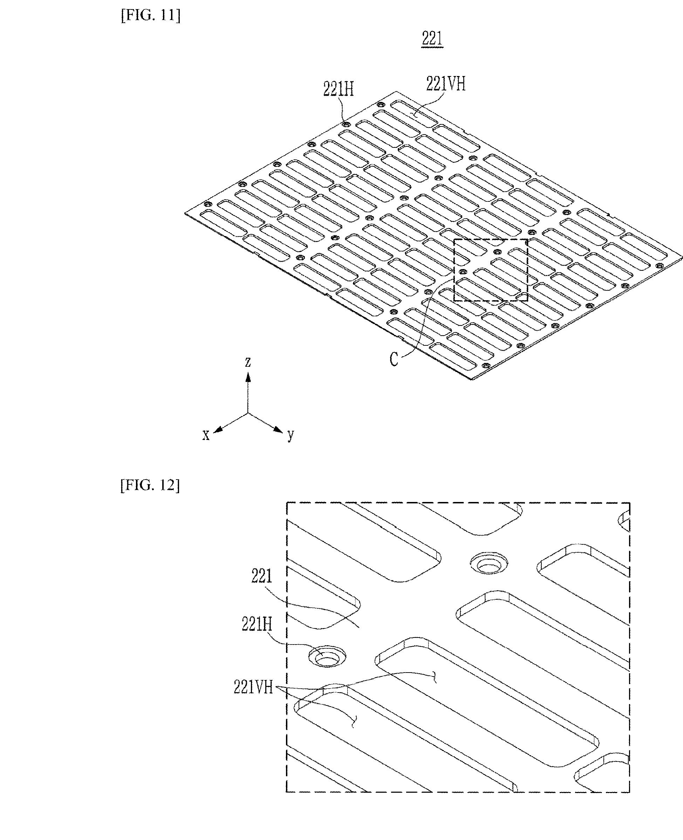

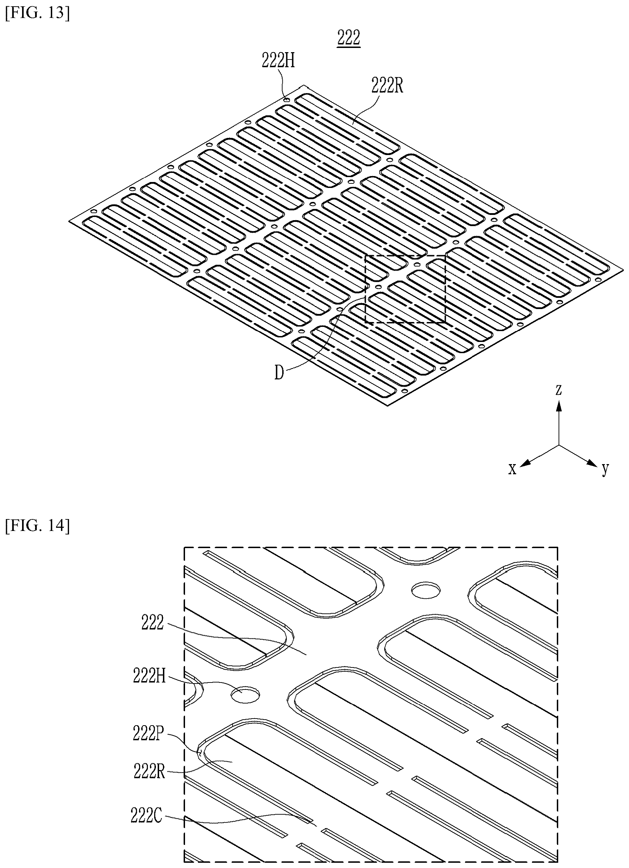

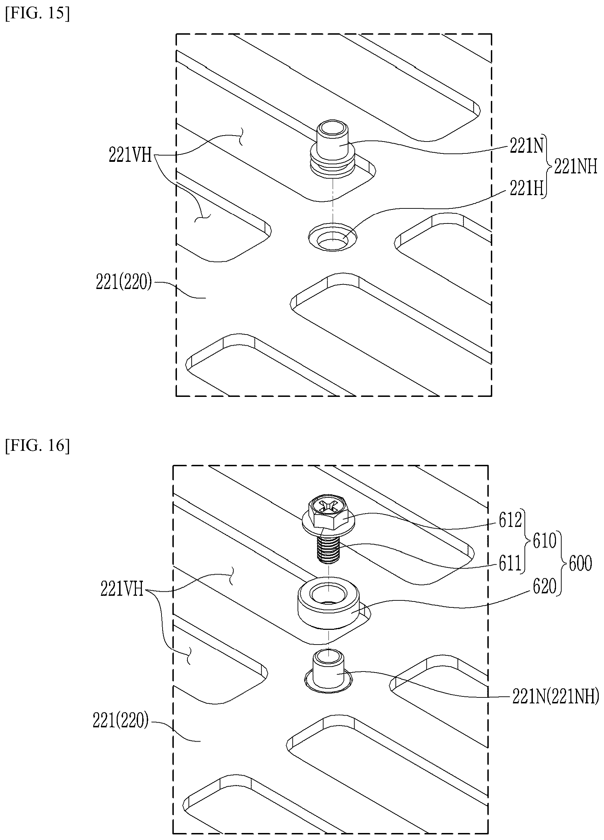

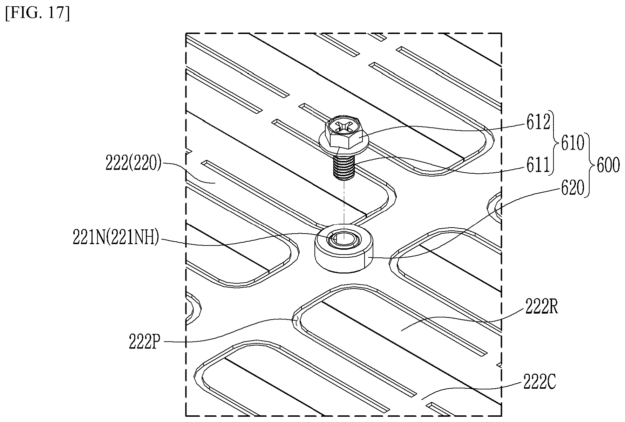

FIG. 9 is a perspective view showing a top cover assembly included in a battery module according to certain embodiments of the present disclosure. FIG. 10 is an exploded perspective view of a top cover assembly according to certain embodiments of the present disclosure. FIG. 11 is a perspective view showing a top plate of the top cover assembly of FIG. 10. FIG. 12 is a partially enlarged perspective view showing a section "C" of FIG. 11. FIG. 13 is a perspective view showing a top cover of the top cover assembly of FIG. 10. FIG. 14 is a partially enlarged perspective view showing a section "D" of FIG. 13. FIG. 15 is a partial perspective view showing a top plate and a rivet nut according to certain embodiments of the present disclosure. FIG. 16 is a partial perspective view showing a top plate, a rivet nut, and a protrusion part according to certain embodiments of the present disclosure. FIG. 17 is a partial perspective view showing a top cover assembly, a rivet nut, and a protrusion part according to certain embodiments of the present disclosure.

Referring to FIGS. 4, 7 to 17 together, the protrusion part 600 according to the present embodiments may be formed on the module frame 200. More specifically, the protrusion part 600 may be formed in the top cover assembly 220 of the module frame 200.

A nut hole 221NH may be formed on the upper surface of the battery module 100 according to the present embodiments, and the protrusion part 600 may include a flange bolt 610 inserted into the nut hole 221NH.

The nut hole 221NH means a hole where a screw thread is formed, and the flange bolt 610 may be inserted into the nut hole 221NH by a bolting coupling. The flange bolt 610 may include a column-shaped fastening part 611 where a screw thread is formed, and a flange part 612 located at one end of the fastening part 611. The fastening part 611 of the flange bolt 610 may be inserted into the nut hole 221NH by a bolt coupling.

If screw threads are formed inside, the specific shape of the nut hole 221NH is not particularly limited. As an example, the nut hole 221NH may have a form in which a rivet nut 221N is inserted into a through hole 221H formed on the upper surface of the battery module 100. Specifically, the top cover assembly 220 according to the present embodiments may include a top plate 221 located on the upper surface of the battery cells 110, and a top cover 222 that covers the upper surface of the top plate 221. A through hole 221H can be formed in such a top plate 221, and a rivet nut 221N having a screw thread therein can be fitted into such a through hole 221H, thereby providing a nut hole 221NH according to the present embodiments. In FIG. 15, the state before the rivet nut 221N is fitted into the through hole 221H of the top plate 221 is shown, and in FIG. 16, the state after the rivet nut 221N is fitted into the through hole 221H of the top plate 221 is shown. Through the structure of the through hole 221H and the rivet nut 221N, the nut hole 221NH can be easily provided on the upper surface of the battery module 100. Although not specifically shown in the figure, in certain other embodiments of the present disclosure, it is also possible to form screw threads directly inside the through hole 221H of the top plate 221. However, since it may be difficult to form screw threads directly inside the through hole 221H due to the material characteristics of the top plate 221, a structure in which the rivet nut 221N is fitted into the through hole 221H may be more appropriate.

In the present embodiments, a protrusion part 600 protruding upward from the upper surface of the battery module 100 can be easily realized through the nut hole 221NH and the flange bolt 610 coupled thereto.

Meanwhile, a top cover hole 222H may have a top cover hole 222H formed therein, which is located to correspond to the through hole 221H of the top plate 221. When the top cover 222 is disposed on the upper surface of the top plate 221, a rivet nut 221N or a flange bolt 610 may pass through the top cover hole 222H.

In addition, the protrusion part 600 according to the present embodiments may further include a spacer 620 located between the flange part 612 of the flange bolt 610 and the upper surface of the battery module 100. Specifically, the spacer 620 may be located between the flange part 612 of the flange bolt 610 and the top cover 222 of the top cover assembly 220. The spacer 620 may be a ring-shaped member having a predetermined height, and a fastening part 611 of a rivet nut 221N or a flange bolt 610 may be inserted into the central hole of the spacer 620.

By adjusting the height of the spacer 620, the overall height of the protrusion part 600 can be adjusted. As mentioned above, the degree of protrusion of the protrusion part 600 for securing a minimum venting space VS may be adjusted based on the size of the battery module 100 and the distance between the battery module 100 and the pack cover 1200. At this time, by mounting a spacer 620 having a desired height, the degree of protrusion of the protrusion part 600, i.e., the overall height of the protrusion part 600, can be easily adjusted.

If the process of forming the top cover assembly 220 and the assembling order of the protrusion part 600 will be described based on FIGS. 15 to 17, first, a through hole 221H can be formed in the top plate 221. Subsequently, a rivet nut 221N can be press-fitted into the through hole 221H. Such a top plate 221 can be joined to the bottom frame 210 (see FIG. 4). Welding joint can be applied to the joining between the top plate 221 and the bottom frame 210. Then, as shown in FIG. 17, the top cover 222 can be disposed on the upper surface of the top plate 221, and then a spacer 620 can be fitted into the rivet nut 221N. Finally, the flange bolt 610 can be assembled by bolting to the rivet nut 221N of the nut hole 221NH. Through this process, the module frame 200 structure provided with the protrusion part 600 can be realized.

As mentioned above, the venting part 220V collectively refers to a mechanism for discharging high-temperature venting gas VG and heat generated inside the battery module 100 to the outside of the battery module 100. Below, a venting part having a venting hole and a rupture part will be described in detail as a structure of the venting part according to the present embodiments.

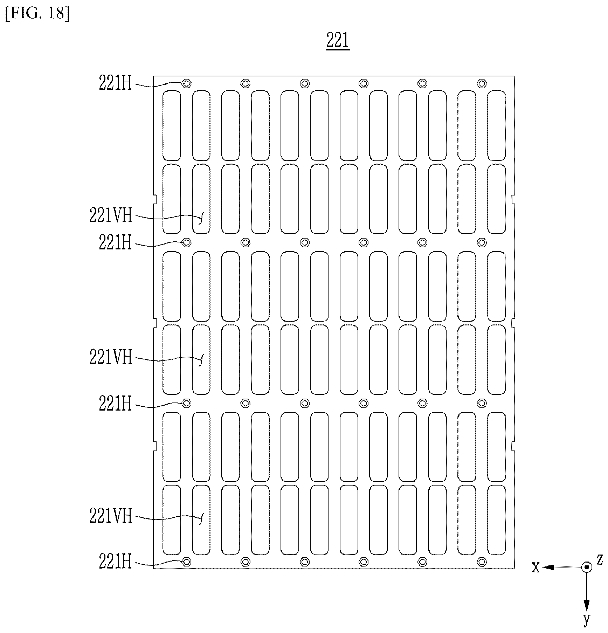

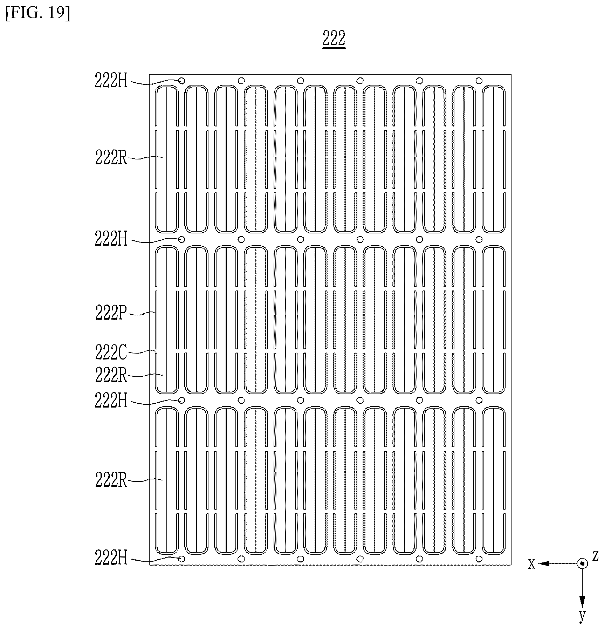

FIG. 18 is a plan view of a top plate according to certain embodiments of the present disclosure as viewed from above. FIG. 19 is a plan view of a top cover according to certain embodiments of the present disclosure as viewed from above. Specifically, FIGS. 18 and 19 are plan views of the top plate and top cover, respectively, as viewed along the -z axis direction on the xy plane.

Referring to FIGS. 3, 4, 7, 8, 10 to 14, 18 and 19 together, the module frame 200 may include a bottom frame 210 on which battery cells 110 are placed and a top cover assembly 220 covering the upper parts of the battery cells 110, and the venting part 220V may be formed in the top cover assembly 220. The top cover assembly 220 may include a top plate 221 located on the upper part of the battery cells 110 and a top cover 222 covering the upper surface of the top plate 221.

The venting part 220V according to the present embodiments may include a venting hole 221VH formed in the top plate 221, and a rupture part 222R formed in the top cover 222 and located corresponding to the venting hole 221VH. The rupture part 222R may have a structure that ruptures at a prescribed pressure or higher.

The vent hole 221VH may be a perforated hole formed in the top plate 221. The rupture part 222R may cover the venting hole 221VH at the upper part of the top plate 221.

An opening 222P may be formed in an area excluding the connection part 222C in the circumference of the rupture part 222R. The opening 222P refers to a perforated portion of the top cover 222. The rupture part 222R according to the present embodiments may be in a form connected to the top cover 222 by the connection part 222C. In other words, the rupture part 222R may be provided in the top cover 222 in a manner in which the perforated opening 222P is formed in the top cover 222 excluding only the connection part 222C.

In addition, when viewed along a direction perpendicular to one surface of the top cover 222, the opening 222P may be located on an outer circumference of the venting hole 221VH. Viewing along a direction perpendicular to one surface of the top cover 222 may correspond to viewing along the -z-axis direction on the xy plane, as in FIGS. 3, 18 and 19. In addition, in FIGS. 8, 18 and 19, etc., it is depicted that in any one of the venting holes 221VH, the opening 222P is provided outside the venting hole 221VH.

When the venting part 220V is viewed from an inner part of the battery module 100 through the above-mentioned structure, the venting hole 221VH is blocked by the rupture part 222R, and the opening 222P is covered by the top plate 221. In other words, the venting hole 221VH is formed in an inner area than the opening 222P, and therefore, when viewed from the inner part of the battery module 100, only the rupture part 222R is exposed through the venting hole 221VH, and the opening 222P is not exposed.

As a result, in a typical state where no thermal event occurs inside the battery module 100, the venting part 220V does not discharge internal gas because the venting hole 221VH is blocked by the rupture part 222R. However, if high-temperature venting gas and heat are generated inside the battery module 100 due to a thermal event or thermal runaway phenomenon and the internal pressure of the battery module 100 increases, the rupture part 222R may rupture. Specifically, if the increased internal pressure of the battery module 100 exceeds the limit strength of the connection part 222C, the connection part 222C may break, and the rupture part 222R may be separated from the top cover 222. Thereby, the venting hole 221VH is opened, and the high-temperature venting gas VG and heat may be discharged to the outside of the battery module 100 through the venting hole 221VH. More specifically, the high-temperature venting gas VG and heat can be discharged to the venting space VS between the pack cover 1200 and the battery module 100 through the venting hole 221VH. The high-temperature venting gas VG and heat flowing along the venting space VS can be discharged to the outside of the battery pack 1000 through a venting device (not shown) provided in the pack frame 1100 or the pack cover 1200.

Meanwhile, referring again to FIGS. 7 to 10 and FIGS. 14 to 17, the top cover 222 according to the present embodiments can be fixed between the top plate 221 and the flange bolt 610. Specifically, the top cover 222 can be fixed between the top plate 221 and the flange part 612 of the flange bolt 610. More specifically, the top cover 222 can be fixed between the top plate 221 and the spacer 620.

The flange bolt 610 and the spacer 620 according to the present embodiments can perform the function of securing and maintaining the venting space VS as well as the function of fixing the top cover 222 to the battery module 100 as mentioned above. If the top cover 222 is detached from the upper part of the battery module 100, the venting space VS may not be maintained. That is, fixing the top cover 222 to the battery module 100 can be effective for securing and maintaining the venting space VS between the battery module 100 and the pack cover 1200.

As an example, the top plate 221 according to the present embodiments can be welded and joined to the bottom frame 210 (see FIG. 4) including a metal material. On the other hand, the top cover 222 may include an FRB-silicone material or a MICA material. In order to induce the connection part 222C connecting the rupture part 222R to break under a prescribed pressure, a metal material may not be applied to the top cover 222. Even if welding joint between the top plate 221 and the top cover 222 is not possible, the top cover 222 may be fixed to the top plate 221 through the flange bolt 610 and the spacer 620. Fixing the top cover 222 using the flange bolt 610 and the spacer 620 may be useful in terms of the materials of the top plate 221 and the top cover 222.

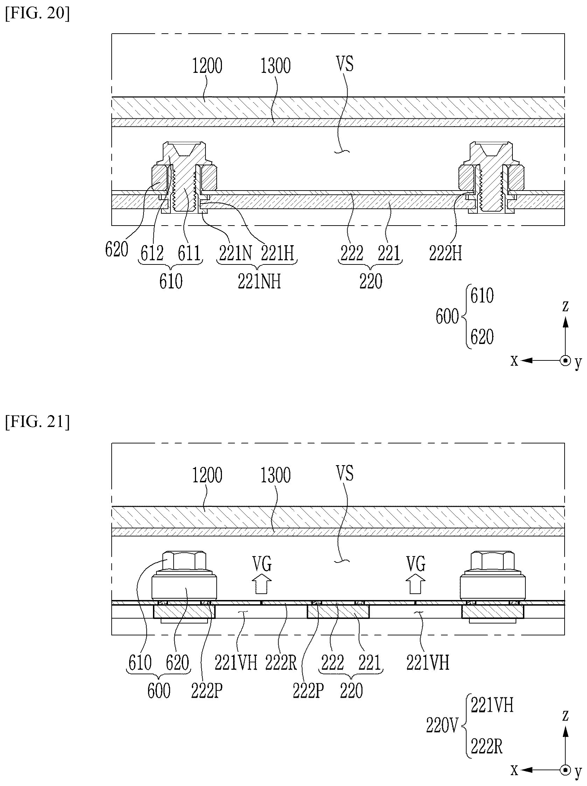

FIGS. 20 and 21 are cross-sectional views of a battery pack according to modified embodiments of the present disclosure.

Referring to FIGS. 1, 20 and 21, a battery pack according to modified embodiments of the present disclosure may further include a heat resistant sheet 1300 attached to the lower surface of the pack cover 1200 between the battery module 100 and the pack cover 1200. The heat resistant sheet 1300 may protect the pack cover 1200 from high-temperature venting gas VG and heat discharged from the battery module 100. As an example, the heat resistant sheet 1300 may be a thin sheet in the shape of a plate containing a MICA material, and may be attached to the lower surface of the pack cover 1200 by a heat resistant adhesive.

The protrusion part 600 according to the present embodiments may protrude from the upper surface of the battery module 100 toward the heat resistant sheet 1300. The protrusion part 600 may face the heat resistant sheet 1300. The heat resistant sheet 1300 is provided to protect the pack cover 1200 from high-temperature venting gas VG and heat, but the performance of the heat-resistant adhesive deteriorates due to heat with the lapse of time, the heat resistant sheet 1300 may be separated from the pack cover 1200.

If there is no protrusion part 600 protruding toward the heat resistant sheet 1300, the detached heat resistant sheet 1300 covers the venting part 220V, and the high-temperature venting gas VG and heat cannot be properly discharged. On the other hand, in the case of the present embodiments, even if the heat resistant sheet 1300 is separated from the pack cover 1200, the protrusion part 600 may support the separated heat resistant sheet 1300, thereby securing and maintaining a venting space VS between the battery module 100 and the heat resistant sheet 1300. That is, in the case of the battery pack 1000 according to the present embodiments, the safety of the battery pack 1000 is improved because a high-temperature venting gas VG and a venting space VS through which heat flows can be secured and maintained between the battery module 100 and the heat resistant sheet 1300.

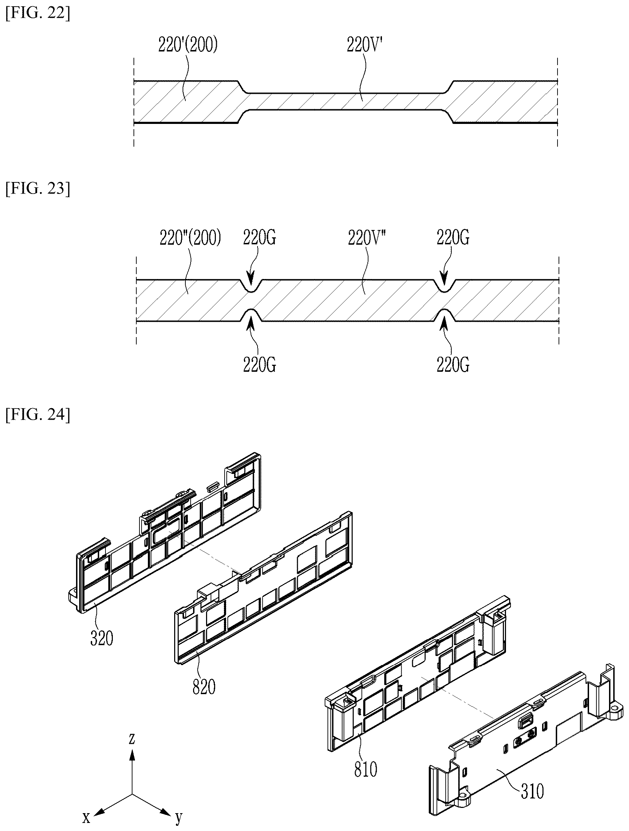

FIGS. 22 and 23 are cross-sectional views showing a venting part according to certain other embodiments of the present disclosure.

Referring to FIGS. 22 and 23, the venting parts 220V' and 220V" collectively refer to a mechanism for discharging high-temperature venting gas and heat generated inside the battery module to the outside of the battery module as mentioned above. The venting part 220V' according to certain other embodiments of the present disclosure may be a portion having a smaller thickness than adjacent areas in order to discharging high-temperature venting gas and heat. Specifically, the top cover assembly 220' of the module frame 200 may be in the form of a single plate, and the venting part 220V' may be a portion having a thickness smaller than the surrounding area of the top cover assembly 220'. When high-temperature venting gas and heat are generated and the internal pressure of the battery module increases, the venting part 220V' having a relatively thin thickness may rupture, and high-temperature venting gas and heat may be discharged.

Meanwhile, the venting part 220V" according to certain other embodiments of the present disclosure may be a portion having a groove 220G formed along its circumference to discharge high-temperature venting gas and heat. Specifically, the top cover assembly 220" of the module frame 200 may be in the form of a single plate, and the venting part 220V" may be an inner side part of the groove 220G formed in the top cover assembly 220". When high-temperature venting gas and heat are generated and the internal pressure of the battery module increases, the groove 220G may rupture first and the venting part 220V" may be opened to discharge high-temperature venting gas and heat.

FIG. 24 is a perspective view showing first and second end plates and first and second insulating covers according to certain embodiments of the present disclosure.

Referring to FIGS. 4, 5 and 24 together, a battery module 100 according to certain embodiments of the present disclosure may include a first insulating cover 810 covering the inner surface of a first end plate 310, and a second insulating cover 820 covering the inner surface of a second end plate 320. The first insulating cover 810 may be located between the first end plate 310 and the first busbar frame 410, and the second insulating cover 820 may be located between the second end plate 320 and the second busbar frame 420. The first insulating cover 810 and the second insulating cover 820 may include an electrically insulating material, and may prevent the first end plate 310 and the second end plate 320 from coming into contact with an electrode lead 111 or a busbar 510 to thereby cause a short circuit.

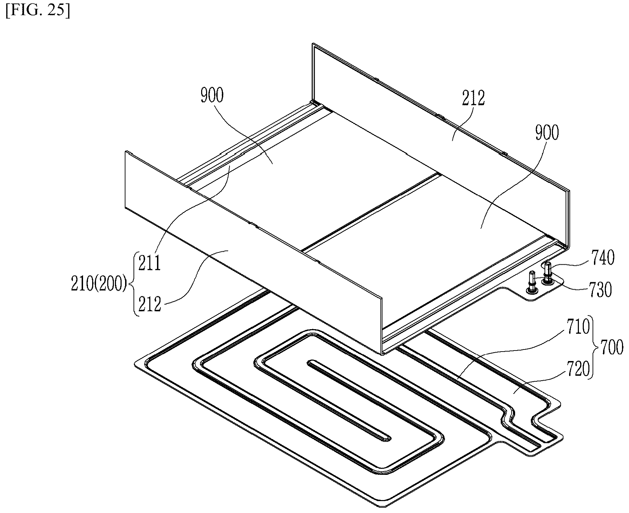

FIG. 25 is a perspective view showing a bottom frame and a heat sink according to certain embodiments of the present disclosure.

Referring to FIGS. 4 and 25, the battery module 100 according to certain embodiments of the present disclosure may further include a heat sink 700 located below the bottom part 211 of the bottom frame 210. The heat sink 700 may include a base part 710 that is connected to the bottom part 211, and a recessed part 720 that is formed downward from the base part 710. Welding joint may be applied to the joining between the bottom part 211 and the base part 710.

While the coolant is flowing in a space between the bottom part 211 and the recessed part 720, the battery module 100 may be cooled. The coolant is a medium for cooling and is not particularly limited, but may be cooling water. That is, the battery module 100 according to the present embodiments may have a water-cooled cooling structure. An inlet 730 and an outlet 740 may be provided in the bottom part 211. The coolant flowing in through the inlet 730 may flow along the space between the bottom part 211 and the recessed part 720, and then be discharged through the outlet 740.

In addition, the battery module 100 may further include a thermal resin layer 900 located between the battery cells 110 and the bottom part 211 of the bottom frame 210. The thermal resin layer 900 may include a thermal resin. The thermal resin layer 900 may be formed on the bottom part 211. The thermal resin may include a thermally conductive adhesive material, and specifically, may include at least one of a silicone material, a urethane material, or an acrylic material. This thermal resin may be in a liquid state during application or cured after application to fix the battery cells 110. In addition, it has excellent thermal conductivity, and can quickly transfer the heat generated from the battery cells 110 to the coolant of the heat sink 700 to prevent overheating of the battery module 100.

In the embodiments above, expressions indicating directions such as "front," "rear," "left," "right," "up," and "down" have been used. These expressions are used only to facilitate the description, and may vary, for example, depending on the location of a target object or an observer.

One or more battery modules according to certain embodiments of the present disclosure described above may be mounted together with various control and protection systems such as a battery management system (BMS), a battery disconnect unit (BDU), and a cooling system, to form a battery pack.

The battery pack can be applied to various devices, which include, for example, transportation vehicles such as electric bicycles, electric vehicles, and hybrids, and energy storage systems (ESS). However, without being limited thereto, the battery pack may be applied to various devices using secondary batteries.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

100: battery assembly
110: battery cell
120: battery cell stack
200: module frame
210: bottom frame
220: top cover assembly
220V: venting part
600: protrusion part
610: flange bolt
620: spacer
1000: battery pack
1100: pack frame
1200: pack cover

## Claims

1. A battery pack comprising:
at least one battery module including a plurality of battery cells;
a pack frame that is opened at its upper part and houses at least one of the battery modules; and
a pack cover that covers the opened upper part of the pack frame;
wherein a venting part for discharging a venting gas is formed on an upper surface of the battery module, and
wherein the battery module includes a protrusion part that protrudes upward from the upper surface of the battery module.

2. The battery pack of claim 1,
wherein the protrusion part protrudes from the upper surface of the battery module toward the pack cover.

3. The battery pack of claim 1,
further comprising a heat resistant sheet attached to a lower surface of the pack cover.

4. The battery pack of claim 3,
wherein the protrusion part protrudes from the upper surface of the battery module toward the heat resistant sheet.

5. The battery pack of claim 3,
wherein the protrusion part faces the heat resistant sheet.

6. The battery pack of claim 1,
wherein a nut hole is formed on the upper surface of the battery module, and
the protrusion part includes a flange bolt that is inserted into the nut hole.

7. The battery pack of claim 6,
wherein the nut hole has a form in which a rivet nut is inserted into a through hole formed on the upper surface of the battery module.

8. The battery pack of claim 6,
wherein the flange bolt includes a fastening part where a screw thread is formed, and a flange part located at one end of the fastening part.

9. The battery pack of claim 8,
wherein the protrusion part includes a spacer located between the flange part and the upper surface of the battery module.

10. The battery pack of claim 1,
wherein the battery module includes a module frame that houses the battery cells, and
the venting part is formed on the upper surface of the module frame.

11. The battery pack of claim 1,
wherein the battery module includes a module frame that houses the battery cells,
the module frame includes a bottom frame on which the battery cells are placed and a top cover assembly that covers the upper parts of the battery cells, and
the venting part is formed in the top cover assembly.

12. The battery pack of claim 11,
wherein the top cover assembly includes a top plate located on an upper part of the battery cells, and a top cover that covers an upper surface of the top plate.

13. The battery pack of claim 12,
wherein the venting part includes a venting hole formed in the top plate, and a rupture part that is formed in the top cover and located corresponding to the venting hole, and
the rupture part has a structure that ruptures at a prescribed pressure or higher.

14. The battery pack of claim 13,
wherein an opening is formed in an area excluding a connection part in a circumference of the rupture part, and
the rupture part is connected to the top cover by the connection part.

15. The battery pack of claim 14,
wherein when viewed along a direction perpendicular to one surface of the top cover, the opening is located on an outer circumference of the venting hole.

16. The battery pack of claim 12,
wherein a nut hole is formed in the top cover assembly,
the protrusion part includes a flange bolt inserted into the nut hole, and
the top cover is fixed between the top plate and the flange bolt.

17. The battery pack of claim 1,
wherein the venting part is a portion having a smaller thickness than adjacent areas or a portion in which a groove is formed along its circumference.

18. A device comprising the battery pack of claim 1.
